# FASCICULE DE BREVET EUROPEEN

(11) **EP 1 042 158 B1**
(45) Date de publication et mention de la délivrance du brevet: **09.06.2004**
(21) Numéro de dépôt: 99950882.3
(22) Date de dépôt: 29.10.1999
(51) Int. Cl.: B62K 27/00, B62K 27/12

(54) **REMORQUE DE VELO**
FAHRRADANHÄNGER
BICYCLE TRAILER

(30) Priorité: 30.10.1998 FR 9813648
(43) Date de publication de la demande: 11.10.2000
(73) Titulaire: Plasturgie du Centre S.A.R.L., 45000 Orléans (FR)
(72) Inventeur: COTTARD, André, F-45160 Olivet (FR); COTTARD, Guillaume, F-45160 Olivet (FR); BLANQUET, Romain, F-59880 Saint-Saulve (FR); MORTIER, Christophe, F-08130 Saulces Champenoises (FR)
(74) Mandataire: Viard, Jean
(86) Numéro de dépôt international: PCT/FR1999/002651
(87) Numéro de publication internationale: WO 2000/026079

(56) Documents cités:
- CA-A- 1 235 435
- DE-U- 9 412 046
- US-A- 4 413 835
- US-A- 4 756 541

## Description

La présente invention a pour objet une remorque pour vélo selon la revendication 1 et destinée en particulier, mais non exclusivement, aux vélos de randonnée pour cyclotouristes connus sous le sigle de V.T.T. pour Vélo Tout Terrain.

De telles remorques sont, d'une manière générale, connues et, dans le type le plus courant, elles comprennent une caisse portée par deux roues la caisse étant attachée au vélo au-dessous de la selle par un manchon solidaire d'un bras ou timon. La remorque peut ainsi prendre un certain débattement angulaire par rapport à la direction d'avance du vélo. Mais une telle remorque ne saurait convenir dans le cas d'un vélo de randonnée qui, par essence, est amené à se déplacer sur des terrains accidentés. C'est à dire que la remorque doit pouvoir disposer de plusieurs degrés de liberté, non seulement par rapport à la direction d'avance du vélo mais également par rapport au plan dans lequel se trouve le vélo qui peut et prend des inclinaisons variables. Or, une telle remorque est indispensable pour les adeptes du cyclotourisme hors routes.

Il a déjà été proposé de constituer une remorque monoroue, la roue étant montée sur le châssis à l'arrière de celui-ci. L'inclinaison de la remorque simultanément à celle du vélo de randonnée est ainsi facilitée. La remorque est attachée sur le moyeu de la roue arrière ce qui permet d'abaisser le centre de gravité de la charge. Mais la longueur de l'ensemble est augmentée par rapport à celle d'une bicyclette équipée d'une remorque classique.

On connaît également une remorque pour vélo de randonnée monoroue constituée par un châssis attaché à la tige de selle, la roue étant fixée à l'arrière de la remorque. Mais l'on observe, pour certaines dénivellations un tangage gênant dans les virages, notamment lorsque le cycliste se met "en danseuse".

Et, dans les deux cas, un sac contenant les vêtements et ou aliments est fixé ou suspendu sur le châssis métallique.

Le brevet canadien CA-B- 1 235 435 décrit une remorque tirée par une bicyclette pour transporter objets et enfants simultanément. la remorque est reliée à la tige de selle par une articulation double autour d'un axe parallèle à la tige de selle et par un axe horizontal monté dans une chape pouvant pivoter autour de l'axe sensiblement vertical. Mais ce montage, destiné à promener des enfants n'est pas du tout adapté au vélo tout terrain dans lequel le timon de la remorque subit des efforts de cisaillement importants.

Un premier objet de l'invention est de pallier les inconvénients des dispositifs connus et de permettre la réalisation d'une remorque légère pouvant être attachée au moyen d'un attelage approprié, à un vélo de randonnée circulant sur des trajets sinueux sans provoquer la chute de celui-ci.

Un second objet de l'invention est la réalisation d'une remorque légère constituée essentiellement d'un châssis métallique et d'une coque en matière plastique, formant un coffre étanche dans lequel, toutefois les objets doivent être fixés pour éviter tout ballant.

L'idée de base de l'invention consiste à déporter , par rapport à la tige de selle, les axes de pivotement de la remorque.

Selon l'invention, la remorque pour vélo de randonnée comprend un châssis et une roue, présentant un timon pouvant être solidarisé de la tige de selle par une liaison articulée selon la revendication 1.

De préférence, l'axe vertical ou pivot est monté sur la potence par l'intermédiaire d'une bague de caoutchouc. Ainsi, la remorque peut se déplacer par rapport au vélo:
- en azimut, en pivotant autour de l'axe vertical;
- en site par pivotement de son tube à l'intérieur de la chape et
- en torsion par déformation élastique du manchon et de la bague en caoutchouc, le caoutchouc étant relativement dur.
Ces moyens élastiques amortissent par ailleurs la propagation au vélo des chocs se produisant sur la remorque, sans toutefois provoquer d'oscillations.

Par vertical et horizontal on entendra, bien entendu, la position de ces différents organes au repos, le vélo et la remorque se trouvant sur une surface plane horizontale.

Selon une autre caractéristique de l'invention, la remorque est constituée par un châssis tubulaire autoporteur en métal recouvert par une carrosserie fermée en matière plastique telle que du polyéthylène.

La pièce de liaison entre la tige de selle et le timon est, de préférence moulée en matière plastique telle que du polyamide de dureté SHORE 70 et constituée de deux coques symétriques assemblées sur la tige de selle par vissage. Cette pièce de forme complexe est ainsi plus facile à fabriquer.

L'axe du pivot est incliné d'un angle d'environ 5° par rapport à la verticale. Cette disposition évite que dans une descente la remorque, entraînée par son poids, parte à gauche ou à droite du vélo et provoque la chute de celui-ci.

Par ailleurs, à tous les niveaux de l'articulation sont prévues des bagues d'usure qui peuvent être aisément remplacées afin de permettre une durée de vie prolongée de la remorque.

Dans un autre mode de réalisation, la chape est articulée autour d'un pivot conique, à l'extrémité d'un arbre solidaire de la chape tournant à l'intérieur d'au moins un roulement à billes.

D'autres caractéristiques et avantages de l'invention apparaîtront au cours de la description qui va suivre d'un mode particulier de réalisation, donné uniquement à titre d'exemple non limitatif, en regard des dessins qui représentent :
- La figure 1, une vue de côté d'une remorque selon l'invention attelée à un vélo;
- la figure 2, une vue en perspective des pièces constituant l'attelage de la remorque non assemblées;
- la figure 3, une vue de côté de l'attelage monté;
- la figure 4, une vue éclatée de l'attelage.
- la figure 5, un autre mode de réalisation de l'attelage;
- La figure 6, un pivot conique pour la mise en oeuvre du mode de réalisation de la figure 5.

Dans ce qui suit, les pièces de l'attelage sont en matière plastique telle qu'un polyamide, à l'exception du pivot vertical qui est en métal. Sur les figures, les mêmes références désignent les mêmes éléments.

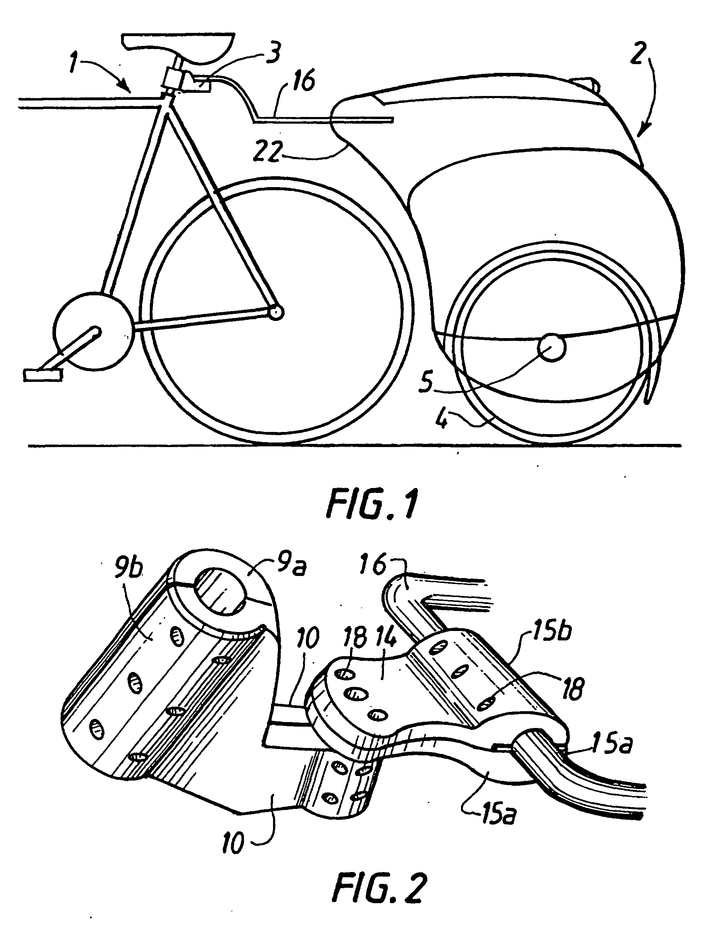

Sur la figure 1, le vélo tracteur 1 est partiellement représenté. Il est solidarisé avec une remorque 2 par l'intermédiaire d'un attelage 3 dans lequel est tourillonné un timon 16 solidaire du châssis de la remorque 2. La remorque 2 repose au sol par une roue unique 4. La roue 4 tourne sur un axe 5 qui est tourillonné sur le châssis tubulaire de la remorque (non représenté). La remorque comprend une partie 22 surplombant en partie la roue arrière du vélo. Cette caractéristique permet d'obtenir que l'axe de la roue de remorque soit relativement proche de l'axe de la roue arrière ce qui est un facteur favorable de stabilité.

Comme cela apparaît sur les figures 2 à 4, l'attelage 3 comporte deux parties, une partie fixée sur la tige de selle constituée d'une plaque de fixation 9 et d'une potence 10 et une seconde partie constituée par une chape 15 destinée à recevoir un tube 16 solidaire de la remorque 2, orthogonal au tube de selle 6, les deux parties étant réunies par un axe ou pivot 13 avec deux degrés de liberté. Les deux pièces moulées sont, chacune, composées de deux coquilles réunies par des vis coopérant avec des écrous , de préférence à tête polygonale, qui sont toutes de même diamètre et de même pas de sorte qu'il soit possible de les visser ou de les dévisser avec un seul outil. Elles portent ainsi que leurs trous la référence 18.

La figure 2 représente en perspective les pièces de liaison constituant l'attelage 3, entre le vélo 1 et la remorque 2. L'attelage est assujetti sur la tige de selle 6, au-dessous de la selle (non représentée).

L'attelage 3 comprend une plaque de fixation 9 constituée de deux coquilles 9a,9b, solidarisées par vissage, chacune des pièces 9a,9b comprenant un creux à section semi circulaire dont le diamètre est sensiblement égal à celui de la tige de selle. Les pièces 9a,9b se prolongent vers l'arrière du vélo par une potence 10. A partir de la potence 10, fait saillie une platine 11 qui, en position de repos est horizontale.

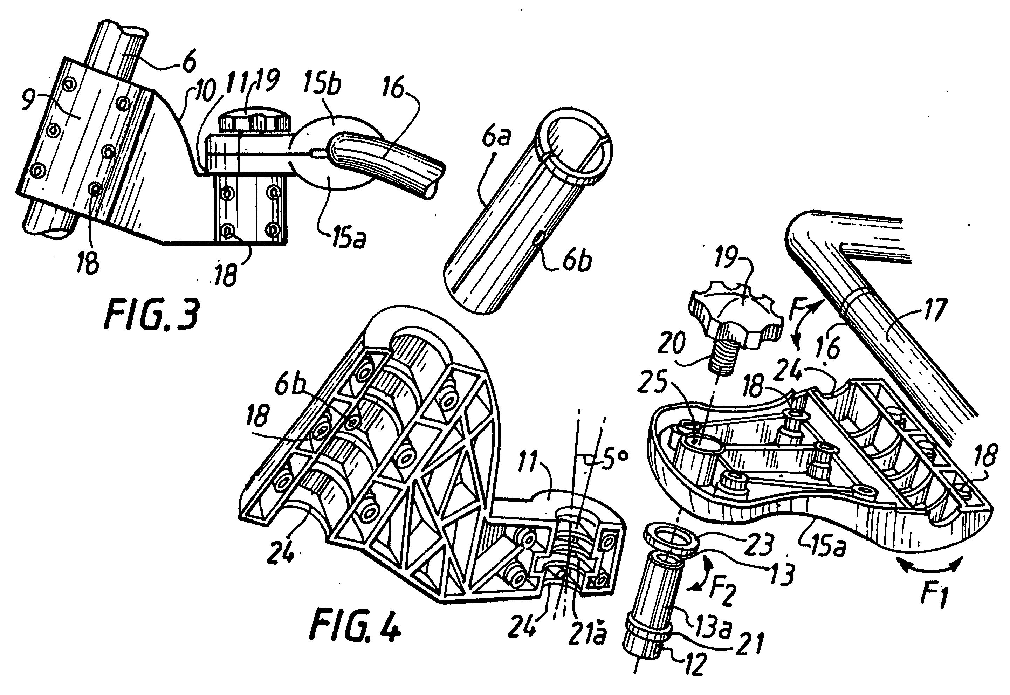

Sur la figure 3, l'attelage est représenté en vue de côté et l'on retrouve sur cette figure la tige de selle 6, sur laquelle est fixée la pièce 9 qui se prolonge par la platine 10,11 portant un axe vertical (non représenté sur la figure), maintenu par une vis dont seul le bouton 19 formant manette de serrage apparaît sur la figure et qui peut être serrée à la main. Elle n'a pour but que de maintenir la chape 14,15 à l'encontre des mouvements verticaux d'arrachement de la chape 15 qui immobilise la barre 16 tout en permettant son pivotement dans le sens vertical.

La figure 4 est une vue éclatée de certains des composants de l'attelage 3. On y retrouve la pièce 9a avec son trou hémicirculaire de passage du tube de selle 6 ou d'un manchon d'adaptation 6a permettant de fixer l'attelage sur des tiges de selle dont il s'est avéré que le diamètre variait d'un constructeur à l'autre. Un trou 6b permet le blocage en rotation de la pièce 9a et par suite de l'attelage sur la tige de selle 6. Les nervures (non référencées) apparaissant sur la figure 4 ont pour but de conférer aux pièces moulées la rigidité nécessaire tout en permettant une économie de matière.

La chape 15, dont seule la partie 15a est représentée sur cette figure, repose sur la platine 11 autour d'un axe de pivotement 13 monté dans la platine 11 par l'intermédiaire d'un épaulement 21 qui se loge dans le logement 21a. Lors du serrage de la vis 20, à l'intérieur de l'axe 13, l'axe peut être immobilisé, pour obtenir un serrage efficace, en glissant un objet pointu dans le trou 12 un trou correspondant (non référencé) étant formé dans la coquille 9a. Normalement, l'axe 13 peut tourner dans son logement. Il est revêtu d'un manchon 13a de caoutchouc relativement dur destiné à permettre une torsion relative des deux composants.

La partie avant 14 de la chape 15, repose sur la platine 11 par l'intermédiaire d'une rondelle 23 à faible coefficient de friction et, par exemple, en Téflon. La partie supérieure du pivot 13 est fermée par la manette 19 dont la jupe filetée 20 se visse dans un filetage de l'axe 13 à travers un trou 25 de la pièce 15a. L'axe de pivotement vertical 13 est maintenu dans la platine 10 par l'épaulement 21. Autour de l'axe 13 est montée pivotante la saillie 14 d'une chape 15 dans laquelle est maintenu un tube 16 solidaire du timon de la remorque 2. Pour éviter que, dans une descente, la remorque passe à côté du vélo, l'axe vertical du pivot 13 est de préférence incliné vers l'arrière d'un angle de 5° environ.

Conformément à l'invention, le tube 16 est inclus dans un manchon de caoutchouc 17. Lors du montage, les pièces 9 et la chape 15 sont fermées par des vis 18. La chape 15 est constituée de deux parties 15a et 15b présentant chacune une rainure semi circulaire dont le diamètre commun est tel que les deux parties puissent enserrer la manchon de caoutchouc 17 à l'intérieur duquel sera glissé le tube 16 de la remorque. Comme représenté par la flèche F1, la remorque peut ainsi pivoter en site autour du tube de l'axe du tube 16. Elle peut pivoter en azimut selon la flèche F2. La remorque peut ainsi effectuer des mouvements variés indépendamment de toute action sur la tige de selle.

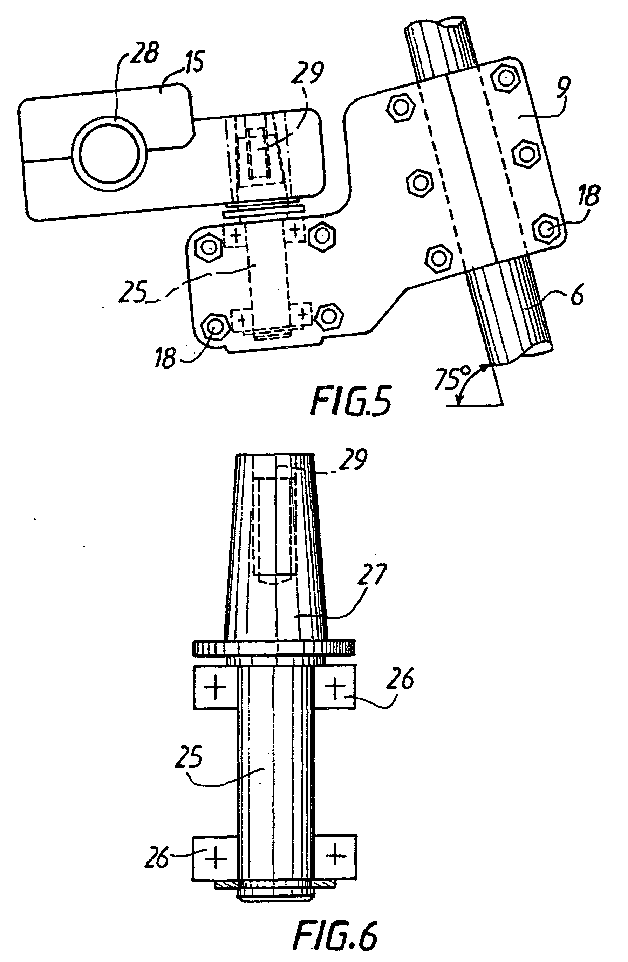

Pour éviter les jeux pouvant se produire avec un montage tel que celui qui vient d'être décrit, il est possible, dans un autre mode de réalisation et comme représenté sur les figures 5 et 6 d'utiliser un pivot conique en saillie par rapport à la chape. La figure 6 représente le pivot assemblé constitué par un axe de pivotement 25 monté, dans l'exemple représenté, à l'intérieur de deux paliers à roulement à billes 26 et qui peut ainsi tourner librement. Cet axe se prolonge à l'extérieur de la platine 11 par un pivot conique 27 dont la partie supérieure présente un trou borgne fileté 29 destiné à recevoir la tige filetée du bouton 29. Grâce à cette disposition, Il est possible d'obtenir un montage sans jeu de la chape 15 sur l'axe 25. Comme précédemment, la liaison entre le timon de la remorque et la chape 15 est obtenue au moyen d'un manchon de caoutchouc. Mais dans ce mode de réalisation, le manchon comprend un film de garniture intérieure 28 en matériau à faible coefficient de frottement tel que du Téflon. Il est ainsi possible de serrer les deux coquilles 15a et 15b de la chape 15, sans bloquer le mouvement de la barre 16 de la remorque autour de l'axe horizontal.

## Revendications

1. Remorque notamment pour vélo de randonnée tout terrain comprenant un châssis et une roue (4), présentant un timon pouvant être solidarisé de la tige de selle (6) par une liaison articulée, **caractérisée en ce que** ladite liaison comprend une pièce de fixation (9,10) apte à être fixée sur la tige de selle, incluant une partie inclinée et une platine horizontale (11), à partir de laquelle fait saillie un axe de pivotement (13), sur lequel est tourillonnée une chape (15) incluant un tube (16) horizontal d'attelage de la remorque (2), l'axe de pivotement (13) étant incliné vers l'arrière d'un angle d'environ 5° par rapport à la verticale, le tube (16) de la remorque étant inclus dans un manchon de caoutchouc (17).

2. Remorque selon la revendication 1, **caractérisée en ce que** le manchon de caoutchouc inclut une garniture interne (28) en matériau à faible coefficient de frottement.

3. Remorque selon la revendication 1 ou 2, **caractérisée en ce que** la chape (15) est montée sur la platine (11) par l'intermédiaire d'une bague (23) à faible coefficient de frottement.

4. Remorque selon la revendication 1 ou 2, **caractérisée en ce que** la chape (15) est montée sur la platine (11) par l'intermédiaire d'un pivot conique (27) solidaire d'un axe (25) monté dans la platine (11) par au moins un roulement à billes (26).

5. Remorque selon la revendication 1, **caractérisée en ce que** qu'elle comprend un châssis métallique sur lequel est fixée une coque (2) de matière plastique.

6. Remorque selon l'une quelconque des revendications précédentes, **caractérisée en ce que** à tous les niveaux de l'articulation sont prévus des bagues d'usure.

7. Remorque selon l'une quelconque des revendications précédentes, **caractérisée en ce que** la pièce de fixation (9) et la chape (15) sont réalisées par moulage de deux pièces symétriques réunies par des vis (18).

## Patentansprüche

1. Anhänger, insbesondere für Gelände-Wanderrad, aufweisend einen Rahmen und ein Rad (4), mit einer Deichsel, die mit der Sattelstange (6) durch eine Gelenkverbindung verbunden werden kann, **dadurch gekennzeichnet, dass** die besagte Verbindung ein Befestigungsteil (9, 10) aufweist, das an der Sattelstange befestigt werden kann, einschließend einen geneigten Teil und eine horizontale Platte (11), aus der ein Schwenkbolzen (13) hervorragt, auf dem ein Gabelgelenk (15) angezapft ist, einschließend ein horizontales Rohr (16) zum Anhängen des Anhängers (2), wobei der Schwenkbolzen (13) nach hinten in einem Winkel von ca. 5 Grad in bezug auf die Vertikale geneigt und das Rohr (16) des Anhängers in einer Gummimuffe (17) inbegriffen ist.

2. Anhänger nach Anspruch 1, **dadurch gekennzeichnet, dass** die Gummimuffe eine interne Garnitur (28) aus einem Material mit einem niedrigen Reibungskoeffizienten einschließt.

3. Anhänger nach Anspruch 1 oder 2, **dadurch gekennzeichnet, dass** das Gabelgelenk (15) auf die Platte (11) mittels eines Rings (23) mit einem niedrigen Reibungskoeffizienten montiert ist.

4. Anhänger nach Anspruch 1 oder 2, **dadurch gekennzeichnet, dass** das Gabelgelenk (15) auf die Platte (11) mittels eines konischen Zapfens (27) montiert ist, der mit einem Bolzen (25) verbunden ist, der in die Platte (11) durch mindestens ein Kugellager (26) montiert ist.

5. Anhänger nach Anspruch 1, **dadurch gekennzeichnet, dass** er einen metallischen Rahmen aufweist, auf dem einen Schale (2) aus Kunststoff befestigt ist.

6. Anhänger nach einem der vorhergehenden Ansprüche, **dadurch gekennzeichnet, dass** auf allen Gelenkebenen Schleißringe vorgesehen sind.

7. Anhänger nach einem der vorhergehenden Ansprüche, **dadurch gekennzeichnet, dass** das Befestigungsteil (9) und das Gabelgelenk (15) durch Formen von zwei symmetrischen Teilen hergestellt werden, die durch Schrauben (18) verbunden sind.

## Claims

1. A trailer notably for a cross-country touring bicycle comprising a chassis and a wheel (4), having a drawbar which may be secured to the saddle bar (6) by a jointed link, **characterized in that** said link comprises a attachment part (9, 10) capable of being attached onto the saddle bar, including a tilted portion and a horizontal plate (11), from which protrudes a pivoting shaft (13), onto which a clevis mounting (15) is threaded including a horizontal tube (16) for coupling the trailer (2), the pivoting shaft (13) being tilted backwards by an angle of about 5° relatively to the vertical, the tube (16) of the trailer being included in a rubber sleeve (17).

2. The trailer according to claim 1, **characterized in that** the rubber sleeve includes an internal lining (28) in a material with a low friction coefficient.

3. The trailer according to claim 1 or 2, **characterized in that** the clevis mounting (15) is mounted on the plate (11) via a ring (23) with a low friction coefficient.

4. The trailer according to claim 1 or 2, **characterized in that** the clevis mounting (15) is mounted on a plate (11) via a conical pivot integral with a shaft (25) mounted in the plate (11) with at least one ball bearing (26).

5. The trailer according to claim 1, **characterized in that** it comprises a metal chassis on which a plastic shell (2) is attached.

6. The trailer according of the preceding claims, **characterized in that** wearing rings are provided at all levels of the joint.

7. The trailer according of the preceding claims, **characterized in that** the attachment part (9) and the clevis mounting (15) are produced by molding two symmetrical parts joined by screws (18).
